**Europäisches Patentamt**

**European Patent Office**

**Office européen des brevets**

(11) Numéro de publication : **0 504 022 A1**

(12) # DEMANDE DE BREVET EUROPEEN

(21) Numéro de dépôt : **92400587.9**

(22) Date de dépôt : **06.03.92**

(51) Int. Cl.$^5$ : **H04B 10/10, H04B 10/22**

(30) Priorité : **15.03.91 FR 9103181**

(43) Date de publication de la demande :
**16.09.92 Bulletin 92/38**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Defour, Martin**
**THOMSON-CSF, SCPI, Cédex 67**
**F-92045 Paris la Défense (FR)**
Inventeur : **Couderc, Georges**
**THOMSON-CSF, SCPI, Cédex 67**
**F-92045 Paris la Défense (FR)**
Inventeur : **Fertala, Rémi**
**THOMSON-CSF, SCPI, Cédex 67**
**F-92045 Paris la Défense (FR)**
Inventeur : **Grossmann, Benoist**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Système de communication optique entre stations mobiles, et procédé de communication correspondant.**

(57)    Dans un système de communication optique utilisable par des mobiles aériens ou spatiaux, chaque station comprend au moins un système optique couvrant un demi-espace, ce système comportant deux dispositifs optiques jumelés pour former respectivement deux voies de réception distinctes : une première voie optique de réception (16, 26) pour l'initialisation dans l'espace, de la direction de communication ; une seconde voie optique (12, 22 ; 46) de réception du contenu de la communication, l'un des deux dispositifs optiques étant également utilisé pour former une voie d'émission pour l'initialisation puis pour la communication dans la direction de communication. La mise en communication s'effectue en trois étapes respectivement de désignation d'objectif, d'acquisition bilatérale itérative et de communication interstations.

Fig. 1

EP 0 504 022 A1

Le domaine de l'invention est celui des systèmes de transmission de signaux entre mobiles. Plus précisément, l'invention a pour objet de fournir un système de liaison optique utilisable par des mobiles aériens ou spatiaux, par exemple pour satisfaire les besoins de communication entre avions ou entre les avions et le sol.

Les systèmes de communication aérienne existants utilisent habituellement la transmission hertzienne, et comportent un certain nombre d'inconvénients. Les ondes électromagnétiques présentent en effet une sensibilité aux brouillages, dus tant aux émissions tierces qu'à celles des équipements embarqués. D'autres limitations tiennent à l'encombrement des bandes de transmission disponibles, et à la faible largeur de bande susceptible d'être dévolue à chaque communication. Enfin, les ondes électromagnétiques présentent l'inconvénient supplémentaire d'être peu discrètes, et, dans certaines situations, de rendre vulnérables des avions souhaitant rester indétectables.

On sait que les liaisons optiques peuvent constituer un substitut avantageux aux liaisons hertziennes, notamment sous l'angle des limitations soulignées ci-dessus. En effet, la communication par voie optique offre l'avantage de présenter une portée suffisante pour des applications aériennes, mais sans excès inutile, d'être peu sensible aux agressions et perturbations extérieures, y compris aux tentatives d'intrusion, et d'être discrète. En outre, la liaison optique permet en général de disposer d'une bande passante utilisable élevée.

Toutefois, l'établissement de communications par voie optique entre mobiles, notamment entre mobiles aériens, suppose de combiner des moyens permettant de faire face aux contraintes suivantes :

– le système doit fournir des moyens de recherche directionnelle, permettant d'assurer un pointage de l'émetteur, au cours d'une phase d'initialisation de la liaison,

– le système doit assurer un pointage de qualité afin de maintenir la liaison; l'asservissement du pointage doit notamment permettre le maintien de la liaison malgré les forts mouvements relatifs qui peuvent exister entre avions,

– la portée de la liaison doit être suffisante pour remplir les besoins opérationnels,

– après une interruption de liaison par un masquage transitoire, la liaison doit pouvoir se réinitialiser rapidement,

– le système doit répondre aux spécifications générales des équipements sur avions,

– le système doit avoir un encombrement compatible avec son utilisation embarquée.

L'invention se donne pour objectif de fournir un jeu de solutions satisfaisant à ces contraintes.

Cet objectif, ainsi que d'autres qui apparaîtront par la suite , sont atteints selon l'invention à l'aide d'un système de communication optique entre deux stations, notamment entre des stations d'émission/réception embarquées à bord d'aéronefs, caractérisé en ce que chaque station comprend au moins un système optique couvrant un champ donné comportant deux dispositifs optiques jumelés pour former respectivement deux voies de réception distinctes :

– une première voie optique de réception pour l'initialisation, dans l'espace, de la direction de communication ; comportant un objectif grand champ et un détecteur permettant de déterminer la direction d'une station appelante,

– une seconde voie optique de réception du contenu de la communication dont la direction de réception est asservie à la direction de la station appelante,

et en ce que l'un des deux dispositifs optiques est également utilisé pour former une voie d'émission pour l'initialisation puis pour la communication dans la direction de communication.

Avantageusement, les première et seconde voies optiques traitent en réception les mêmes signaux, provenant de la même voie d'émission de la station distante.

De façon à permettre une bonne couverture de l'espace, en minimisant les angles morts de transmission, les stations d'émission/réception sont préférentiellement munies de systèmes optiques de type à grand angle, et présentent une ouverture approximativement hémisphérique.

D'une manière supplémentaire, lorsque la fonction de poursuite est assurée par le même système; l'un des dispositifs optiques est utilisé également pour cette fonction.

Avantageusement, la voie d'émission de chaque système optique comprend des moyens de contrôle et de commande de focalisation, assurant un contrôle de la direction d'émission du faisceau optique. Elle comprend également avantageusement un déflecteur optique appartenant au groupe comprenant les déflecteurs acousto-optiques et les miroirs galvanométriques, en amont desdits moyens de contrôle et de commande de focalisation, et est préférentiellement illuminée par une source constituée d'un ou plusieurs faisceaux lasers.

Dans un mode de réalisation avantageux, la voie optique réceptrice grand champ pour l'initialisation est située en dérivation sur le dispositif optique assurant l'émission et comporte un détecteur CCD.

Préférentiellement, le dispositif optique assurant la réception du contenu de la communication comprend au moins un capteur optique rapide, à grande sensibilité appartenant au groupe comprenant les photodiodes, les photodiodes à avalanche et les photomultiplicateurs.

L'invention concerne également un procédé d'établissement de communications au moyen d'un système tel que décrit précédemment, caractérisé en ce qu'il comprend les étapes suivantes :

– une première étape de désignation d'objectif, dans laquelle la station appelante émet un premier signal optique d'initialisation dans un champ de recherche prédéterminé présumé inclure la station appelée ;

– une seconde étape itérative d'acquisition bilatérale dans laquelle chacune des stations appelée et appelante émet en retour, après réception d'un signal optique d'initialisation émis par l'autre station, un nouveau signal d'initialisation couvrant un champ d'émission réduit, ladite seconde étape itérative étant menée jusqu'à obtention d'une précision d'acquisition directionnelle prédéterminée entre lesdites stations ;

– une troisième étape de communication interstations, dans laquelle lesdites stations échangent des données utiles, chacune des stations réalisant, en réception, d'une part la réception des signaux utiles à travers ladite seconde voie optique de réception du contenu de la communication, et d'autre part le rafraîchissement de la poursuite à travers ladite première voie optique d'initialisation et de poursuite, dans l'espace, de la direction de communication.

Avantageusement, ladite première étape de désignation d'objectif comporte un processus de balayage de faisceau optique par la station appelante, pour balayer un champ de recherche.

De façon préférentielle, dans le cas de l'utilisation d'un détecteur CCD dans la voie optique réceptrice d'initialisation, la précision d'acquisition recherchée dans la détermination de la direction lors de la seconde étape itérative du procédé est de l'ordre de quelques pixels dudit détecteur CCD.

Dans certain modes de réalisation, le rafraîchissement de la poursuite lors de la troisième étape de communication interstations est réalisé à partir d'informations de trajectoire fournies par des moyens extérieurs audit système de liaison optique.

D'autres caractéristiques et avantages de l'invention apparaîtront à la lecture de la description suivante de quelques modes de réalisation préférentiels de l'invention, donnés à titre illustratif et non limitatif, et des dessins annexés dans lesquels :

– la figure 1 schématise les éléments constitutifs essentiels d'un mode de réalisation préférentiel de la chaîne optique d'un système de communication pour aéronefs, selon l'invention ;

– la figure 2 schématise le mode d'intégration des divers modules fonctionnels de l'invention susceptibles de coopérer avec la chaîne optique de la figure 1 ;

– la figure 3 schématise un mode de réalisation d'une voie optique de réception de signal utile, utilisable dans un système selon les figures 1 ou 2 ;

– la figure 4 représente l'enchaînement de trois étapes d'un procédé type de mise en communication selon l'invention.

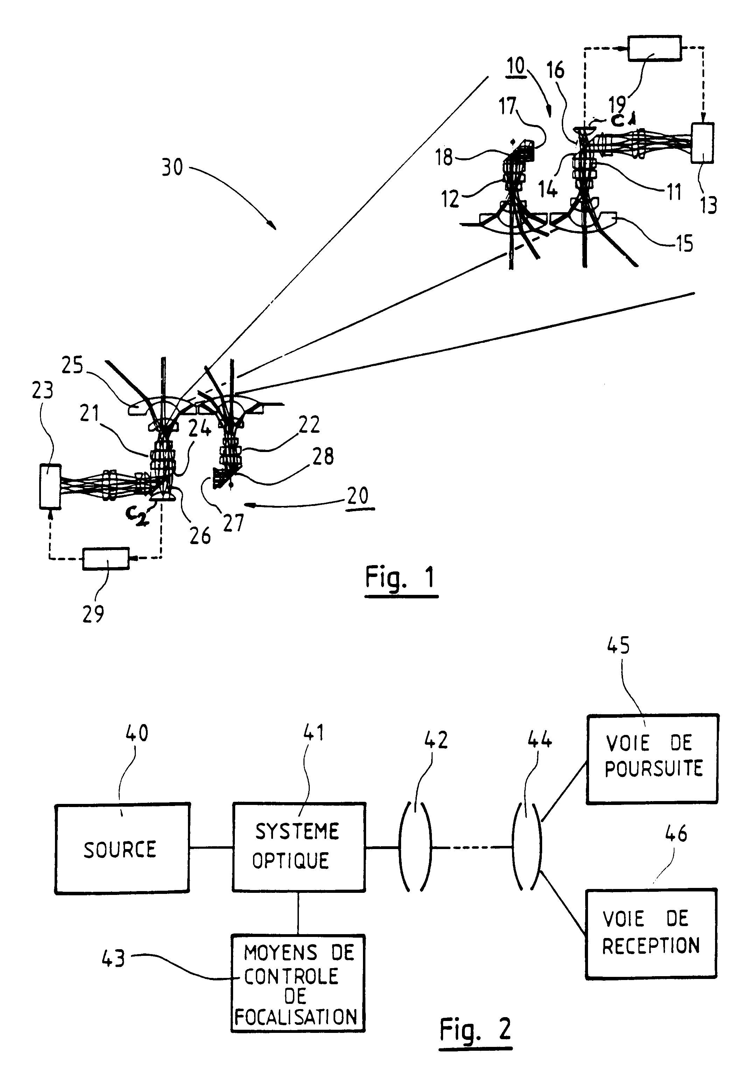

Comme représenté en figure 1, l'invention concerne un système de liaison optique 30 entre deux stations 10, 20 distantes. Chacune des stations distantes peut être par exemple un aéronef. Dans le mode de réalisation représenté, la station 20 peut aussi être une station au sol, communiquant avec un aéronef 10. Chacune des stations 10, respectivement 20, est munie, de façon symétrique, de deux dispositifs optiques jumelés 11, 12, respectivement 21, 22. Les premiers dispositifs optiques 11, 21 des stations 10, 20 respectivement coopèrent chacun avec une source 13, 23 pour l'émission des communications et avec un détecteur $C_1$, $C_2$ pour l'initialisation. Les signaux optiques émis sont réfléchis par les miroirs séparateurs 14, 24 en direction de l'objectif 15, 25 à grand angle de chacun des systèmes optiques 11, 21.

Comme décrit plus en détails ci-après, les sources optiques d'émission 13, 23 peuvent émettre des faisceaux larges (grand champ) ou des pinceaux étroits (petit champ) en direction de la station distante. Elles sont associées dans les dispositifs optiques 11, 21 à des moyens d'orientation de la direction du faisceau émis et qui autorisent suivant les phases un balayage du champ de vision (station appelante en phase d'initialisation), ou un pointage précis de l'émission (station appelée en phase de réponse ou de communication, station appelante en phase de communication).

La réception des signaux est réalisée au moyen de deux voies optiques distinctes :

– une première voie optique de réception pour l'initialisation dans l'espace, de la direction de communication ; dans le mode de réalisation représenté sur la figure 1, cette première voie 16, 26 utilise partiellement le premier dispositif optique 11, 21 déjà utilisé pour l'émission ;

– une seconde voie optique de réception du contenu de la communication reçue, utilisant le deuxième dispositif optique, de réception respectivement 12, 22.

La poursuite, c'est-à-dire l'actualisation de la direction de communication au cours de cette communication est effectuée soit via la voie réceptrice utilisée pour l'initialisation, soit via la voie de réception de la communication.

La voie d'initialisation sert à détecter un appel de station distante, puis, dans le cas où elle est utilisée également en poursuite à acquérir, vérifier et corriger continûment le pointage des émissions de réponse vers la station distante. Le miroir séparateur 14, 24 assure la séparation de la voie d'émission et de la voie de réception qui lui est associée dans ce premier dispositif. Des moyens de commande 19, 29 assurent l'asservissement de la direction d'émission de la source 13, 23 en fonction des données fournies par cette voie de réception 16, 26, et des instructions d'émission. Bien entendu, la voie optique de poursuite peut également être placée sur l'autre dispositif optique 12, 22, en dérivation de la voie de réception du contenu de la communication. On pourra également imaginer qu'elle figure dans un système optique distinct. L'homme du métier identifiera aisément les composants technologiques utilisables pour la chaîne optique.

Les deux voies de réception d'un système optique de l'une des stations 10, 20 traitent les signaux provenant d'une même voie d'émission de la station distante, 20, 10 respectivement, ou éventuellement provenant des voies d'émission de plusieurs stations distantes, en cas de communications multiples susceptibles d'être reçues en temps partagé.

Les dispositifs optiques 12, 22 utilisés pour la réception des communications comprennent des éléments optiques 17, 27 formant transducteurs opto-électroniques rapides. Un transducteur adapté au petit champ reçu permet d'obtenir une grande sensibilité. Pour cela, un miroir ou un jeu de miroirs mobiles 18, 28, assure le renvoi du faisceau optique reçu, en direction des transducteurs 17, 27 respectivement, linéaires (barrettes de photodiodes) ou ponctuels (photodiodes).

Avantageusement, chacun des deux dispositifs optiques 11, 12 ; 21 , 22 équipant chaque station 10, 20 comporte un objectif grand angle de type Fish-Eye. Le capteur $C_1$, $C_2$ de la voie d'initialisation, utilisable également pour la poursuite, peut être un imageur rapide de type CCD fenêtrable et à grand nombre de points permettant la localisation de l'interlocuteur à grande cadence (100 à 1000 Hz). Le transducteur 17, 27 de la voie de réception principale 12, 22, est constitué d'un ou plusieurs capteurs (ou barrettes de capteurs) rapides, par exemple de type photodiodes, photodiodes à avalanche ou photomultiplicateur.

Chaque dispositif couvre préférentiellement un demi espace dans le repère de la station (par exemple, dans le repère avion). L'ensemble du champ de réception peut être couvert par un ou plusieurs dispositifs de balayage mono-(ou bi-) directionnel de type miroir rapide 14, 24, 18, 28. L'objectif Fish-Eye 15, 25 du dispositif optique pour l'émission et la réception en veille (initialisation) présente un champ image égal ou plus grand que le champ image du dispositif optique 22 de réception des communications..

La figure 2 présente le schéma fonctionnel de la chaîne optique complète, en régime établi après pointage directionnel, par exemple de la station 20 vers la station 10. La source 40 est constituée d'un ou plusieurs faisceaux lasers. Les faisceaux lasers traversent un ou plusieurs déflecteurs dans le système optique 41 qui assure la focalisation du faisceau dans le plan image de l'objectif Fish-Eye. Le ou les déflecteurs sont par exemple de type acousto-optique, ou constitués d'un miroir galvanométrique, asservi(s) par des moyens de contrôle de direction et de focalisation 43. Une position du point de focalisation dans le plan de l'objectif Fish-Eye correspond à un angle de déflexion du faisceau en sortie de l'objectif Fish-Eye. Le ou les faisceaux en sortie du dispositif auront une direction et une divergence fonction de la position et de la taille de la tache dans le plan image. Les moyens de contrôle de focalisation permettent, le cas échéant, d'adresser simultanément dans une ou plusieurs directions, de façon à permettre des communications multiples simultanées avec différentes stations distantes. De façon connue, les moyens de contrôle de focalisation peuvent être tout moyen, piloté notamment informatiquement, adapté à un système optique à focalisation variable du type d'une lentille divergente mobile rétractable. Après déflexion et focalisation, le faisceau traverse le système optique 42, chemine dans l'espace, et aboutit dans la station réceptrice au système optique 44 de réception pour transmission aux deux voies de réception 45, 46 de poursuite, de la direction de communication et de réception du signal de communication utile respectivement. Cette chaîne optique est réplicable de façon identique en sens contraire.

Pour certaines applications, la communication peut être unidirectionnelle : dans ce cas le récepteur est simplement associé à des moyens d'émission d'un signal de positionnement permettant le pointage et la poursuite directionnelle par la station émettrice.

Quel que soit le mode de réalisation, l'invention présente l'avantage de fournir des communications quasi instantanées, du fait que la chaîne de transmission ne comporte pratiquement aucune, voire absolument aucune, pièce mécanique.

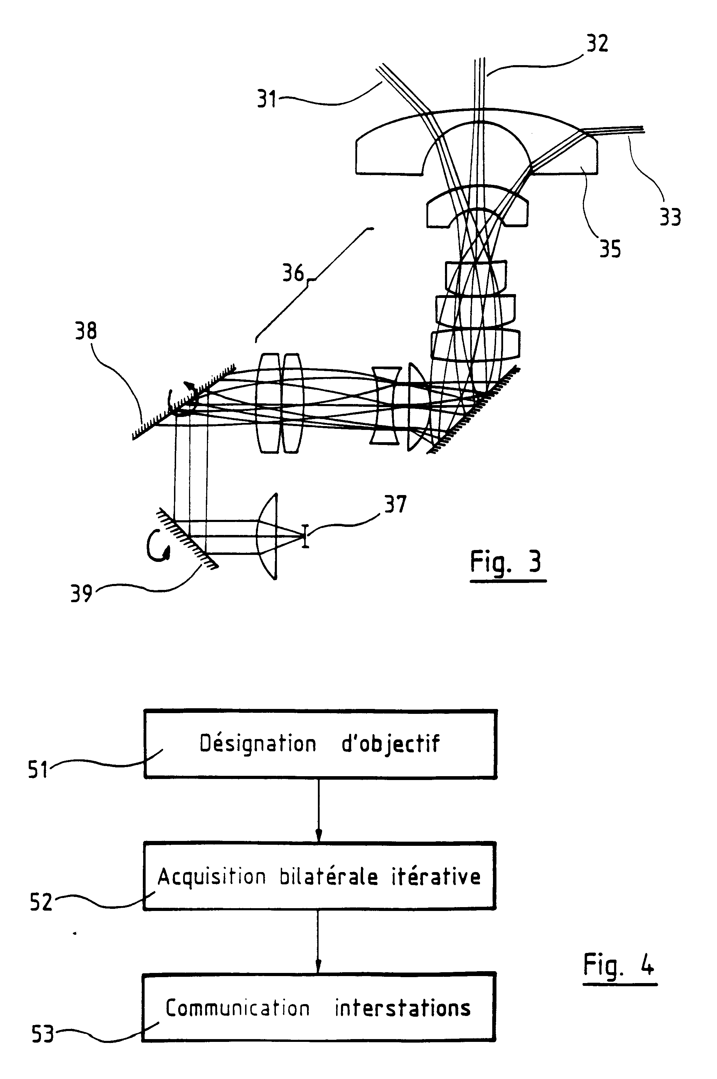

La figure 3 illustre un mode de réalisation de la voie optique 46 (figure 2) de réception du signal utile. Les faisceau incident 31 ou 32 ou 33 selon la direction de communication, focalisé à travers l'objectif Fish-Eye 35 vers le jeu de lentilles de réception 36. Le faisceau atteint une photodiode ponctuelle 37 après réflexion sur deux miroirs pivotants 38, 39 asservis respectivement selon deux directions orthogonales en fonction de la direction de communication pour maintenir l'image formée par le faisceau incident sur la photodiode.

La figure 1 illustrait une autre possibilité de réception du signal utile, dans laquelle le transducteur des dispositifs optiques 12, 22 de réception du signal utile est constitué d'un capteur linéaire, coopérant avec un miroir 18, 28 unique de balayage dans la direction perpendiculaire à la barrette de photodiode.

Comme schématisé par la figure 4, la communication est établie au cours d'un procédé d'établissement des communications comportant les trois étapes suivantes :

– désignation d'objectif (51),
– acquisition bilatérale itérative (52) ,
– communication proprement dite (53).

L'étape 51 d'émission pour la désignation d'objectif s'effectue à partir d'une prédésignation de qualité moyenne. Plus grande sera cette qualité, plus grande sera la distance à laquelle pourra se faire la désignation et plus court sera le temps nécessaire. A titre d'exemple, il a été imaginé des modes de désignation en fonction de gammes de champs :
– grand champ (de l'ordre de 200 mrd),
– moyen champ (de l'ordre de 100 mrd),
– petit champ (de l'ordre de 10 mrd).
Ces champs sont les champs d'émission. L'interlocuteur appelant émet dans le mode correspondant à la qualité de prédésignation. Dans certaines configurations, on peut envisager un dispositif de balayage pour étendre le champ de recherche. L'interlocuteur appelé reçoit alors un signal de son imageur.

Le signal reçu par l'appelé permet à l'appelant d'affiner la prédésignation au cours de l'étape 52 d'acquisition bilatérale itérative. Un signal réémis par l'appelé dans un champ moyen dans la direction de l'appelant permet à ce dernier de réduire à son tour son champ d'émission. La phase de désignation est terminée lorsque la qualité de la désignation est de l'ordre de quelques pixels du capteur CCD de chacune des voies d'initialisation des stations communicantes. Lorsque cette qualité de désignation est atteinte, les deux interlocuteurs passent en mode "petit champ" et augmentent la fréquence de rafraîchissement pour la poursuite par un fenêtrage (vignettage) de l'imageur (par exemple jusqu'à 1000 Hz).

Dans la phase de communication proprement dite 53, les déflecteurs (par exemple : miroirs rapides) des voies de réception de la communication utile positionnent dans chaque récepteur l'image du faisceau laser reçu sur la barrette de photodiodes, selon un champ de vision cohérent avec la précision des photodiodes.

A titre d'exemple, le dispositif peut être appliqué aux communications ESPACE/SURFACE, ESPACE/AIR, AIR/SURFACE ou SURFACE/SURFACE, chaque type pouvant nécessiter un nombre différent de dispositifs.

En outre, le dispositif prévu dans chaque station constitue un illuminateur petit champ de grand débattement à pointage rapide.

**Revendications**

1. Système de communication optique entre deux stations, notamment entre des stations d'émission/réception embarquées à bord d'aéronefs, caractérisé en ce que chaque station comprend au moins un système optique couvrant un champ donné comportant deux dispositifs optiques jumelés (11, 12 ; 21, 22) pour former respectivement deux voies de réception distinctes :

– une première voie optique de réception (16, 26) pour l'initialisation, dans l'espace, de la direction de communication ; comportant un objectif grand champ et un détecteur permettant de déterminer la direction de communication avec une autre station,
– une seconde voie optique (12, 22 ; 46) de réception du contenu de la communication dont la direction de réception est asservie à la direction de communication, et en ce que l'un des deux dispositifs optiques est également utilisé pour former une voie d'émission pour l'initialisation puis pour la communication dans la direction de communication.

2. Système selon la revendication 1 caractérisé en ce que lesdites première et seconde voies de réception traitent les mêmes signaux, provenant de la même voie d'émission (11, 21 ; 40, 41, 42) d'une autre station.

3. Système selon l'une des revendications 1 et 2 caractérisé en ce que la première voie comporte un objectif grand champ, de type Fish-Eye, et la seconde voie comporte un objectif afocal grand champ associé à un bloc de déflexion, ces objectifs présentant une ouverture approximativement hémisphérique.

4. Système selon l'une quelconque des revendications 1 à 3 caractérisé en ce que la voie d'émission des communications est formée dans le premier dispositif optique (11, 21).

5. Système selon l'une des revendications 1 à 4 caractérisé en ce qu'une voie de poursuite est située en dérivation sur l'un ou l'autre desdits dispositifs optiques jumelés (11, 21; 12, 22).

6. Système selon l'une quelconque des revendications 1 à 5 caractérisé en ce que la voie d'émission (11, 21) comprend des moyens (41, 42) de contrôle et de commande de focalisation, assurant un contrôle de la direction d'émission du faisceau optique.

7. Système selon la revendication 6 caractérisé en ce que en amont desdits moyens de contrôle et de commande de focalisation (43), ladite voie d'émission comprend au moins un déflecteur optique appartenant au groupe comprenant les déflecteurs acousto-optiques et les miroirs galvanométriques.

8. Système selon l'une quelconque des revendications 1 à 7 caractérisé en ce que la voie d'émission (11, 21) dudit émetteur/récepteur est illuminée par une source (40) constituée d'un ou plusieurs faisceaux lasers.

9. Système selon l'une quelconque des revendications 1 à 7 caractérisé en ce que le détecteur de voie optique réceptrice d'initialisation (16, 26 ; 45) est un détecteur CCD formant imageur à grand nombre de points.

10. Système selon l'une quelconque des revendications 1 à 9 caractérisé en ce que ladite seconde voie optique (12, 22) de réception du contenu de la communication comprend au moins un capteur optique rapide (17, 27, 37) appartenant au groupe comprenant les photodiodes, les photodiodes à avalanche et les photomultiplicateurs.

11. Procédé d'établissement de communications au moyen d'un système selon l'une quelconque des revendications 1 à 10, caractérisé en ce qu'il comprend les étapes suivantes :
    – une première étape (51) de désignation d'objectif, dans laquelle la station appelante émet un premier signal optique d'initialisation dans un champ de recherche prédéterminé présumé inclure la station appelée ;
    – une seconde étape itérative d'acquisition bilatérale (52) dans laquelle chacune des stations appelée et appelante émet en retour, après réception d'un signal optique d'initialisation émis par l'autre station, un nouveau signal d'initialisation couvrant un champ d'émission réduit, ladite seconde étape itérative étant menée jusqu'à obtention d'une précision d'acquisition directionnelle prédéterminée entre lesdites stations ;
    – une troisième étape de communication interstations (53), dans laquelle lesdites stations échangent des données utiles, chacune des stations réalisant, en réception, d'une part la réception des signaux utiles à travers ladite seconde voie optique de réception du contenu de la communication, et d'autre part le rafraîchissement de la poursuite à travers ladite première voie optique d'initialisation et de poursuite, dans l'espace, de la direction de communication.

12. Procédé selon la revendication 10 caractérisé en ce ladite première étape de désignation d'objectif (51) comporte un processus de balayage de faisceau optique par la station appelante, pour étendre le champ de recherche.

13. Procédé selon l'une quelconque des revendications 11 et 12, destiné à être mis en oeuvre dans un système selon la revendication 9, caractérisé en ce que la précision d'acquisition directionnelle recherchée au cours de ladite seconde étape itérative (52) est de quelques pixels dudit détecteur CCD de la voie réceptrice d'initialisation (16, 26).

14. Procédé selon l'une quelconque des revendications 11 à 13 caractérisé en ce que le rafraîchissement de la poursuite de ladite troisième étape de communication interstations (53) est réalisé à partir d'informations de trajectoire fournies par des moyens extérieurs audit système de communication optique.

Fig. 1

SOURCE

SYSTEME OPTIQUE

MOYENS DE CONTROLE DE FOCALISATION

VOIE DE POURSUITE

VOIE DE RECEPTION

Fig. 2

_Fig. 3_

51 — Désignation d'objectif

52 — Acquisition bilatérale itérative

53 — Communication interstations

_Fig. 4_

Office européen
des brevets

**RAPPORT DE RECHERCHE EUROPEENNE**

Numero de la demande

EP 92 40 0587

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 218 874 (SONY) <br> * Page 6, ligne 18 - page 7, ligne 18; abrégé; figure 4 * | 1 | H 04 B 10/10 <br> H 04 B 10/22 |
| A | | 2-6,8, 11,14 | |
| Y | EP-A-0 325 429 (BRITISH AEROSPACE) <br> * Abrégé; revendications 3,6; figures 5,7 * | 1 | |
| A | | 3-6,8, 11,14 | |
| A | FR-A-2 350 010 (THOMSON-CSF) <br> * Page 2, lignes 18-29; page 9, lignes 12-29; revendications 1,2 * | 1-5,7, 10-12, 14 | |
| A | EP-A-0 282 399 (THOMSON-CSF) <br> * Revendications 1,7,10,12 * | 1-7,11, 12 | |
| A | US-A-4 279 036 (PFUND) <br> * Colonne 6, lignes 6-41; colonne 9, lignes 24-37; colonne 9, ligne 55 - colonne 10, ligne 16 * | 1-6,8, 11 | **DOMAINES TECHNIQUES RECHERCHES (Int. Cl.5)** <br><br> H 04 B |
| A | 1985 IEEE MILITARY COMMUNICATIONS CONFERENCE, MILCOM'85, Boston, MA, 20-23 octobre 1985, vol. 1, pages 94-97; W.A. SEAMAN, Jr., et al.: "Free space laser communication terminals" <br> * Page 96, colonne de droite, alinéa 1; page 97, colonne de gauche, alinéas 1-3; abrégé * | 1-3,6 | |

Le présent rapport a été établi pour toutes les revendications

| Lieu de la recherche | Date d'achèvement de la recherche | Examinateur |
|---|---|---|
| LA HAYE | 04-06-1992 | GOUDELIS M. |